Europäisches Patentamt

European Patent Office

Office européen des brevets

(11) Publication number: **0 461 700 A1**

# EUROPEAN PATENT APPLICATION

(21) Application number: **91201348.9**

(22) Date of filing: **04.06.91**

(51) Int. Cl.5: **A01N 37/16**, //(A01N37/16, 37:44,25:04)

(30) Priority: **12.06.90 EP 90201510**

(43) Date of publication of application: **18.12.91 Bulletin 91/51**

(84) Designated Contracting States: **AT BE CH DE DK ES FR GB GR IT LI LU NL SE**

(71) Applicant: AKZO N.V.
Velperweg 76
NL-6824 BM Arnhem(NL)

(72) Inventor: **Ploumen, Jan Joseph Hubert**
**Florasingel 79**
**NL-6043 WC Roermond(NL)**
Inventor: **Borgmann-Strahsen, Renate**
**Weissdornstrasse 13**
**W-5102 Würselen(DE)**

(74) Representative: **Schalkwijk, Pieter Cornelis et al**
**AKZO N.V., Patent Department (Dept. CO),**
**P.O. Box 9300**
**NL-6800 SB Arnhem(NL)**

(54) Aqueous disinfectant compositions, and concentrates for preparing the same.

(57) The present invention relates to aqueous disinfected compositions based on solid, substantially insoluble organic peroxyacids with enhanced effectiveness against Pseudomonas aeruginosa by incorporating sequestering agents, surfactants and buffers. Also concentrated suspensions dilutable to disinfectant compositions are disclosed.

EP 0 461 700 A1

The invention relates to aqueous disinfectant compositions based on peroxy compounds, and further to concentrates for convenient storage and transport which for use, are readily diluted to the appropriate actives concentration.

The present disinfectant compositions are intended to be used for disinfecting objects and surfaces in domestic, agricultural, industrial and medical use, more particularly for disinfecting glass houses and pots in horticulture, animal or poultry houses in farming, equipment and containers in the food and drinks industry, and generally, in hospitals or other locations where microbial contamination is of major concern. It is known that peroxy compounds such as peroxyacetic acid are broad spectrum biocides that have a wide applicability against bacteria and are usable against viruses, moulds and yeasts. According to EP-A-233 731 peroxyacids of monocarboxylic acids having a carbon chain length of 5 to 8 carbon atoms show enhanced activity against a broad spectrum of micro-organisms including spores. Though only moderately soluble in water, these lower fatty peroxyacids are sufficiently soluble to be used as aqueous solutions at the required disinfectant concentration. However, aqueous solutions of these peroxyacids have only limited chemical stability, since the decomposition rate of peroxy acid is much faster in the liquid phase than in the solid phase. Therefore, in actual practice the users will have to prepare the disinfectant composition just before use, which is particularly inconvenient because of the hazardous nature of peroxides.

It is known that the chemical stability of aqueous suspensions of solid, substantially water-insoluble peroxyacids is considerably higher. Besides, US-A-4 147 720 mentions that aliphatic diperoxydicarboxylic acids possess, inter alia, superior disinfecting properties. It was observed that a solid, substantially water-insoluble organic peroxyacid such as 1,12-diperoxy dodecanedioic acid did show effective killing ability with respect to various bacteria, such as Staphylococcus aureus, Streptococcus faecalis, Proteus mirabilis and Escherichia coli, but it failed to kill Pseudomonas aeruginosa within an acceptable killing time of below 30 min at appropriate concentrations of 100 ppm active oxygen content. Therefore, these peroxyacids as such cannot be generally approved as a disinfectant.

Accordingly, the invention aims to provide specific peroxyacid compositions which overcome the above shortcomings, more particularly in that they are effective also against Pseudomonas aeruginosa as well as sufficiently stable to permit pre-formulation, optionally in the form of dilutable concentrates, storage, and transport from the manufacturer to the user. Preferably, such compositions or their concentrates should be readily manageable by the users in view of the hazardous nature of the peroxyacids involved.

This object is achieved by the invention through an aqueous disinfectant composition containing a bacteriocidally effective amount of a solid, substantially water-insoluble organic peroxyacid and a synergistically effective amount of a sequestering agent. Preferably the disinfectant further contains a surfactant, and a buffer to effect a pH of the composition in the range of from 2 to 7, or more preferably in the range of from 3 to 6,5.

It is noted that US-A-4 642 198 discloses liquid bleaching compositions comprising from about 1 to 40 wt.% of an organic peroxyacid, a surfactant, and an electrolyte including buffering salts such as trisodium citrate, which compositions have a pH of from 1 to 6.5. It is indicated that such compositions may contain from 10 to 1000 ppm of a sequestering agent for complexing the metal ion contaminants and thus chemically stabilizing the peroxyacid. However, such amounts of sequestering agent in the range of from 10 to 1000 ppm per 10,000 to 400,000 ppm (= 1 - 40 wt.%) of peroxyacid fall far short of showing any appreciable synergistic biocidical activity. Can. J. Microbiol. 4, 499-503 (1958) and J. Med. Lab. Technol. 1970, 27(2), 203-6 disclose that the biocidal activity of quaternary ammonium and phenolic disinfectants with respect to Pseudomonas aeruginosa is promoted by the combination with chelating agents such as ethylene diamine tetra acetic acid. US-A-3 965 026 discloses all-purpose germicidal liquid cleaners containing a quaternary ammonium germicide and nitrilotriacetic acid. No biocides other than quaternary ammonium are considered in these publications.

Surprisingly, it has been discovered that the incorporation of sequestering agents into the aqueous peroxy acid compositions at levels substantially higher than required for its chemical stabilization will result in a synergistically enhanced biocidal activity, to the extent that also the killing of Pseudomonas aeruginosa passes the generally accepted standard. Generally, levels of from 10 to 1000 ppm of the sequestering agent per 100 ppm of active oxygen content for the organic peroxyacid in the composition according to the invention provide killing times of 20 min or less at this active oxygen content appropriate for disinfectant use.

Suitable solid, substantially water-insoluble organic peroxyacids include mono- and polyperoxyacids comprising a long aliphatic chain for providing water-insolubility. The organic peroxyacids may include further functional groups or links, for example for increasing chemical stability. As non-limiting examples the solid organic peroxyacids disclosed in EP-A-160 342, EP-A-176 124, EP-A-267 175, US-A-4 681 592, US-A-4 634 551, GB-A-1 535 804, EP-A-325 288 and EP-A-349 940 may be used, all of which are incorporated herein by reference. Specific suitable organic peroxyacids include diperoxy acids, such as 1,12-diperoxy dodecanedioic acid, diperazelaic acid and 1,13-diperoxytridecanedioic acid, peroxyacids having a polar link in the hydrocarbon chain, such as N-decanoyl-6-aminoperoxyhexanoic acid, N-dodecanoyl-6-aminoperoxyhexanoic acid, 4-nonylamino-4-oxoperoxybutyric acid and 6-nonylamino-6-oxoperoxyhexanoic acid, alkyl sulphonyl peroxycarboxylic acids, such as heptyl sulphonyl perpropionic acid and decyl sulphonyl perpropionic acid, and 6-phthalimido peroxyhexanoic acid Preferably, the solid, substantially water-insoluble organic peroxyacid is a peroxycarboxylic acid derived from a dicarboxylic acid containing 8 to 13 carbon atoms, in particular 1,12-diperoxy dodecanedioic acid. Methods for preparing such organic peroxyacids are known in the art and in particular from the above cited references.

The sequestering agents used in the compositions according to the present invention are and include dipicolinic acid, dipicolinic acid N-oxide, picolinic acid and various organic phosphonic acids or phosphonates such as ethylene diamine tetra-(methylene phosphonic acid) and diethylene triamine penta-(methylene phosphonic acid). Further suitable and presently preferred sequestering agents include polycarboxy derivatives of amine or polyamines having metal chelating activity. Such preferred sequestering agents include nitrilotriacetic acid, ethylene diamine tetra acetic acid, diethylene triamine pentaacetic acid and hydroxyethyl ethylene diamine triacetic acid, or their salts.

It was observed that the present compositions require a pH in the range of from 3 to 6 for effective killing of Pseudomonas aeruginosa.

Neutral and weakly alkaline conditions tend to prolong the killing times. For maintaining a pH in the most suitable range the present compositions, particularly if they are prepared from concentrates, should contain a buffer. Preferred buffers comprise a salt of phosphoric, boric or acetic acid. Common buffer concentrations appeared to be suitable. According to a particularly preferred embodiment very low buffer concentrations of about 6 g/l can be applied if the buffer comprises at least two salts from the groups of monophosphates, borates and acetates.

The surfactant component of the present compositions can be any conventional surfactant, for example as commonly used in detergents, provided that it is sufficiently stable to oxidation by the peroxyacid component. The usable surfactants can be anionic, such as alkyl aryl sulfonates, alkyl sulfates, alkyl sulfonates and alkyl ether sulfates, nonionic, such as ethylene oxide and/or propylene oxide condensation products with alcohols, alkylphenol, fatty acids or fatty acid amides, cationic, such as quaternary ammonium compounds, or zwitterionic, such as fatty imidazolines and betaines.

In a preferred embodiment of the invention the surfactants contained in the aqueous disinfectant composition are also effective in stabilizing concentrated suspensions. Thus, stable peroxyacid suspensions become available which, upon simple dilution, provide the present disinfectants containing the suitable surfactant in the suitable concentration. Suitable surfactants for stabilizing suspensions are known, for example as disclosed by US-A-4 642 198, being incorporated herein by reference. Aqueous surfactant-structured liquids capable of suspending solid particles are especially suitable and require the further presence of an electrolyte, which may be a buffering electrolyte. Accordingly, it is preferred that the surfactant of the present disinfectant composition be selected from anionic surfactants, nonionic surfactants, and mixtures thereof. Most preferably, the surfactant is an alkali metal alkyl benzene sulfonate.

The present disinfectant compositions can be prepared by the simple addition of appropriate amounts of the components to water, or by combining aqueous solutions or dispersions of the separate components in appropriate ratios. More conveniently, concentrated compositions are prepared by stably suspending the water-insoluble peroxyacid in water containing the water-soluble components in a suitable proportion. Such concentrates can be prepared by the peroxyacid manufacturer, after which due to the enhanced physical and chemical stability, they can be readily transported to and stored by the end user. When needed, the present disinfectant compositions are obtainable by dilution with water. If desired, the final composition can be modified by dilution with aqueous buffer and/or surfactant solutions in order to increase their relative concentration.

Suitable concentrates contain

(i) 2.5 - 45 wt.% of a solid, substantially water-insoluble organic peroxyacid;

(ii) 1 - 10 wt.% of a sequestering agent;

(iii) 0,5 - 30 wt.% of a surfactant;

(iv) a buffer suitable to provide the diluted composition in with a pH in the range of from 3 to 6,5.

Alternatively, a solid, powdered concentrate may be prepared for dilution with water, or aqueous surfactant or buffer solution. The solid, powdered concentrate will comprise from 10 to 1000 ppm of the sequestering agent per 100 ppm of active oxygen content of the organic peroxyacid. For improved storage and increased compatibility of the several solid components the organic peroxyacid is suitably present in form of phlegmatized granules, for example such as disclosed in EP-A-376 360.

3

The invention will be further illustrated by the following examples. Herein the biocidal effectiveness is assessed by the qualitative DGHM suspension test and the European Suspension test (EST) respectively. In the qualitative DGHM Supension Test at time zero 10 ml of a test liquid of indicated composition is mixed with 0,1 ml of a concentrated suspension of test bacteria (containing about $10^9$ cfu/ml). After contact times of 1, 10, 20, and 30 minutes 0,1 ml of the test mixture is investigated on surviving bacteria. The time needed for total killing of the bacteria is reported. In the European Suspension Test the biocidal agent acts against the test microorganisms in the presence of organic load (0,03% borine albumin), Exactly after 5 minutes contact time at 20°C the microbiocidal effect ($ME_5^{20}$ value) is determined as logarithmic reduction of living cells per ml . To pass the test a disinfection formulation must induce a $ME_5^{20}$ value of at least 5.

The test disinfectant liquids were prepared by diluting a stock suspension containing 27,5 wt.% of 1,12-diperoxy dodecanedioic acid (A.O. = 3,3 wt.%), 3 wt.% of sodium sulfate and balance water with aqueous solutions of the sequestering agent, surfactant and buffers to provide the concentrations mentioned.

Example 1 (comparative)

In this example the activity of 1,12-diperoxy dodecanedioic acid as such was tested by dilution of the stock suspension with water to an active oxygen content (A.O.) of 100 ppm. Five ubiquitous bacteria species were subsequently contacted with the test liquid according to the qualitative DGHM Supension Test and the following killing times observed.

| Bacteria: | Killing time in minutes: |
|---|---|
| Staphylococcus aureus | < 1 |
| Streptococcus faecalis | < 1 |
| Proteus mirabilis | < 10 |
| Pseudomonas aeruginosa | > 30 |
| Escherichia coli | < 10 |

Thereupon Pseudomonas aeruginosa was contacted with increasing dosages of 1,12-diperoxy dodecanedioic acid up to 900 ppm of A.O.. Even at the highest concentration the test liquid failed to achieve total killing of Pseudomonas aeruginosa within 30 min.

Example 2

In this example disinfectant liquids comprising sequestering agent, surfactant and buffer in accordance with the invention were contacted with Pseudomonas aeruginosa according to the qualitative DGHM Suspension Test. The results are reported in Table I, in which the concentrations of the sequestering agents nitrilotriacetic acid (NTA) and ethylene diamine tetra acetic acid (EDTA), and the active oxygen content from the 1,12-diperoxy dodecanedioic acid (DPDA) are expressed in ppm (by weight), and the concentrations of buffer and surfactant are expressed in grams per liter.

4

TABLE I

| No. | A.O. (ppm) | Sequestrant | | Buffer [1] | | | LAS [2] | pH | killing time (min) |
|-----|-----|-----|-----|-----|-----|-----|-----|-----|-----|
| | | NTA (ppm) | EDTA (ppm) | bor-ate (g/l) | phos-phate (g/l) | ace-tate (g/l) | (g/l) | | |
| 2A | 176 | 200 | - | 14,0 | 13,3 | 8,4 | 0,5 | 5 | < 1 |
| 2B | 85 | 200 | - | 14,0 | 13,3 | 8,4 | 0,5 | 6 | 10-20 |
| 2C | 193 | 200 | - | 14,0 | 13,3 | 8,4 | 0,5 | 7 | 20-30 |
| 2D | 86 | 200 | - | 14,0 | 13,3 | 8,4 | 0,5 | 9 | > 30 |
| 2E | 148 | - | 200 | 14,0 | 13,3 | 8,4 | 0,5 | 5 | 1-10 |
| 2F | 162 | - | 200 | 14,0 | 13,3 | 8,4 | 0,5 | 7 | 10-20 |
| 2G | 79 | - | 200 | 14,0 | 13,3 | 8,4 | 0,5 | 9 | > 30 |

[1] borate buffer: $Na_2B_4O_7.10H_2O$
phosphate buffer: $K_2HPO_4$
acetate buffer: Na-acetate
added amounts of salts are mentioned, followed by acidification
through addition of sulfuric acid to set pH.

[2] LAS = linear alkylbenzene sulfonate

Example 3

In this example disinfectant compositions having an optimal pH value of 5 and containing lower amounts of buffer and increased amounts of surfactant were tested. In all cases effective killing of Pseudomonas aeruginosa was observed according to the qualitative DGHM Suspension Test. See Table II.

TABLE II

| No. | A.O. | Sequestrant | | Buffer [1] | | | LAS [2] | pH | killing time |
| | | NTA | EDTA | bor-ate | phos-phate | ace-tate | | | |
| | (ppm) | (ppm) | (ppm) | (g/l) | (g/l) | (g/l) | (g/l) | | (min) |
| 3A | 188 | 200 | - | 3.5 | 3.3 | 2.1 | 4.0 | 5 | 10-20 |
| 3B | 178 | 200 | - | 2.8 | 2.6 | 1.7 | 4.0 | 5 | 1-10 |
| 3C | 197 | 200 | - | 2.8 | 2.6 | 1.7 | 3.0 | 5 | 10 |
| 3D | 203 | 200 | - | 2.3 | 2.2 | 1.4 | 4.0 | 5 | 10 |
| 3E | 198 | 200 | - | 3.5 | - | 2.1 | 4.0 | 5 | 10 |
| 3F | 91 | 200 | - | 3.5 | 3.3 | 2.1 | 4.0 | 5 | 10 |
| 3G | 107 | 200 | - | 3.5 | - | 2.1 | 4.0 | 5 | 1-10 |
| 3H | 97 | 400 | - | 3.5 | - | 2.1 | 4.0 | 5 | 10 |

[1] borate buffer: $Na_2B_4O_7.10H_2O$

phosphate buffer: $K_2HPO_4$

acetate buffer: Na-acetate

added amounts of salts are mentioned, followed by acidification

through addition of sulfuric acid to set pH;

[2] LAS = linear alkylbenzene sulfonate

Example 4

The biocidal activity of different formulation in the presence of organic load was determined according to the EST method. The test organism was Pseudomonas aeruginosa.

TABLE III

| No. | A.O. (ppm) | Sequestrant | | Buffer [1] | | | LAS [2] (g/l) | pH | killing time (min) |
|-----|------------|-------------|------|------------|------------|------------|---------------|-----|--------------------|
|     |            | NTA (ppm)   | EDTA (ppm) | bor-ate (g/l) | phos-phate (g/l) | ace-tate (g/l) |               |     |                    |
| 4A[4] | 43/39 | 200 | - | 14,0 | - | 8,4 | 0,5 | 5 | 6,12/5,27 |
| 4B[4] | 72/62 | 200 | - | 14,0 | - | 8,4 | 0,5 | 5 | ≥6,66/≥6,22 |
| 4C[4] | 81/90 | 200 | - | 7,0 | 6,6 | 4,2 | 1,0 | 5 | ≥6,66/≥6,22 |
| 4D | 42 | 200 | - | 14,0 | - | 8,4 | 0,5 | 4 | ≥6,67 |
| 4E | 51 | 200 | - | 14,0 | - | 8,4 | 0,5 | 3 | ≤6,67 |

[1]) see above

[2]) see above

[3]) $ME_5^{20}$ value = logarithmic reduction after 5 minutes contact time at 20°C

[4]) determination in duplicate

## Example 5

The way by which the disinfection suspension has been prepared, might affect its performance. An example to illustrate this effect is given in Example 5.

The basis suspension comprises:

DPDA : 0,8 g/l
NTA : 0,2
LAS : 0,5
Borax: 14,0
Sodium acetate: 8,4

Two different sequences were applied.

## Procedure 1

- dissovle nitriloacetic and alkylbenzene sulfonic acid in the appropriate amount of water
- dissolve the buffer salts resulting into a solution of pH = 9,2
- admix the DPDA resulting in a clear solution of pH 9,1
- adjust the pH to the value which is required resulting in an opaque dispersion.

## Procedure 2

- adjust the intermediate solution of NTA, LAS and buffers to pH = 5,0
- admix the DPDA
- adjust the pH to the final value of 5,0, 4,0 or 3,0
- the test suspension is a fine dispersion A.

We applied the same test procedure as given in example 4, to determine the disinfectancy.

## TABLE IV

The disinfectancy on P5.AU. expressed as $ME_5{}^{20}$ values .

| Procedure/pH | 1 | 2 |
|---|---|---|
| 3,0 | 6,4 | 6,4 |
| 4,0 | 6,4 | 6,4 |
| 5,0 | 6,1 | 6,3 |

The procedure by which the final disinfectant is realized does not play a role at the pH 3-4. If a pH of 5 is required, for example to meet the target of the one-step-cleaning-and-disinfectancy, procedure 1 is preferred.

## Claims

1. An aqueous disinfectant composition based on peroxy compounds, characterized in that it contains a bacteriocidally effective amount of a solid, substantially water-insoluble organic peroxyacid and a synergistically effective amount of a sequestering agent.

2. A disinfectant according to claim 1, characterized in that it contains from 10 to 1000 ppm of the sequestering agent per 100 ppm of active oxygen content of the organic peroxyacid.

3. A disinfectant according to claim 1 or 2, characterized in that the solid, substantially water-insoluble organic peroxyacid is a peroxycarboxylic acid derived from a dicarboxylic acid containing 8 to 13 carbon atoms.

4. A disinfectant according to claim 3, characterized in that the organic peroxyacid is 1,12-diperoxydodecanedioic acid.

5. A disinfectant according to claims 1-4, characterized in that the sequestering agent is a polycarboxy amine.

6. A disinfectant according to claim 5, characterized in that the sequestering agent is nitrilotriacetic acid or ethylene diamine tetra acetic acid.

7. A disinfectant according to one or more of claims 1-6, characterized in that it further contains a surfactant, and a buffer to effect a pH of the composition in the range of from 2 to 7.

8. A disinfectant according to claims 1-7, characterized in that the buffer comprises a salt of phosphoric, boric or acetic acid.

9. A disinfectant according to claim 8, characterized in that the buffer comprises at least two salts from the groups of monophosphates, borates and acetates.

10. A disinfectant according to claims 1-9, characterized in that the surfactant is selected from anionic surfactants, nonionic surfactants and mixtures thereof.

11. A disinfectant according to claim 10, characterized in that the surfactant is an alkali metal alkyl benzene sulfonate.

12. A concentrate for dilution with water to provide an aqueous disinfectant composition according to one or more of the claims 1-11.

13. A concentrate according to claim 12, being a stable suspension and containing
(i) 2,5 - 45 wt.% of a solid, substantially water-insoluble organic peroxy acid;
(ii) 1 - 10 wt.% of a sequestering agent;
(iii) 0,5-30 wt.% of a surfactant;
(iv) a buffer suitable to provide the diluted composition with a pH in the range of from 3 to 6,5.

14. A concentrate according to claim 12, being a solid, powdered mixture of the components of the disinfectant comopsition, such that from 10 to 1000 ppm of the sequestering agent per 100 ppm of active oxygen content of the organic peroxyacid are present.

European
Patent Office

EUROPEAN SEARCH
REPORT

Application Number

EP 91 20 1348

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 321 302  (HENKEL & CIE GmbH) <br> – – – | | A 01 N 37/16 // <br> (A 01 N 37/16 |
| A | EP-A-0 228 137  (THE PROCTER & GAMBLE CO.) <br> – – – | | A 01 N 37:44 <br> A 01 N 25:04 ) |
| A | EP-A-0 176 124  (AKZO N.V.) <br> – – – – – | | |

TECHNICAL FIELDS
SEARCHED (Int. Cl.5)

A 01 N

The present search report has been drawn up for all claims

| Place of search | Date of completion of search | Examiner |
|---|---|---|
| The Hague | 17 September 91 | DONOVAN T.M. |